Europäisches Patentamt

European Patent Office

Office européen des brevets

(11) Veröffentlichungsnummer: **0 508 226 A1**

# EUROPÄISCHE PATENTANMELDUNG

(21) Anmeldenummer: **92105192.6**

(22) Anmeldetag: **26.03.92**

(51) Int. Cl.5: **A22C 13/02**

(30) Priorität: **10.04.91 DE 4111623**

(43) Veröffentlichungstag der Anmeldung:
**14.10.92 Patentblatt 92/42**

(84) Benannte Vertragsstaaten:
**AT BE CH DE DK ES FR GB GR IT LI NL PT SE**

(71) Anmelder: **Kollross, Günter**
**Am Wallerstädter Weg 20**
**W-6080 Gross Gerau-Dornheim(DE)**

(72) Erfinder: **Kollross, Günter**
**Am Wallerstädter Weg 20**
**W-6080 Gross Gerau-Dornheim(DE)**

(74) Vertreter: **Jochem, Bernd, Dipl.-Wirtsch.-Ing.**
**Staufenstrasse 36**
**W-6000 Frankfurt/Main(DE)**

(54) **Verfahren und Vorrichtung zum maschinellen Verpacken eines auf einem Raffrohr gerafften Schlauchabschnitts.**

(57) Das Verfahren dient zum maschinellen Verpakken eines auf einem Raffrohr (16) zu einer Schlauchraupe (34) gerafften Schlauchabschnitts, z.B. Kunstdarm für die Wurstherstellung. Die Schlauchraupe (34) wird in ein vorgerafftes Schlauchnetz (38) eingehüllt, welches auf einer Vorratstrommel (36) mit einem geschlossenen Ende (42) bereitgehalten und beim axialen Einführen der Schlauchraupe (34) übergestülpt und danach an deren hinteren Ende verschlossen wird. Zur Vereinfachung der Vorrichtung, und um eine axiale Ausdehnung der Schlauchraupe (34) vor dem Verpacken zu vermeiden, erfolgt das axiale Einführen der Schlauchraupe (34) in das am Ende geschlossene Hüllmaterial (38) und dessen Überstülpen, während die Schlauchraupe noch auf dem Raffrohr (16) sitzt. Vor dem Einhüllen wird die Schlauchraupe (34) noch weiter verdichtet, indem sie mit ihrem vorderen Ende gegen einen axial festgehaltenen Anschlag (64) gefahren wird.

FIG. 2

Die Erfindung betrifft ein Verfahren zum maschinellen Verpakken eines auf einem Raffrohr zu einer Schlauchraupe gerafften Schlauchabschnitts, z. B. Kunstdarm für die Wurstherstellung, in schlauchförmigem Hüllmaterial, welches in gerafftem Zustand mit einem geschlossenen Ende gehalten, beim axialen Einführen der Schlauchraupe übergestülpt und an deren hinteren Ende verschlossen wird.

Um geraffte Schlauchraupen zu verpacken, ist es aus der DE 31 38 685 A1 bekannt, ein radial elastisches, schlauchförmiges Hüllmaterial in kurzen Abschnitten zu raffen, deren Länge jeweils nur für eine einzelne Schlauchraupe ausreicht. Während diese noch auf dem Raffrohr sitzt, wird der an beiden Enden offene Hüllmaterialabschnitt im radial aufgeweiteten Zustand über die Schlauchraupe gebracht und radial aufgeschrumpft. Dann wird die umhüllte Schlauchraupe vom Raffrohr abgestreift. Es hat sich dabei jedoch gezeigt, daß die nur radiale Umspannung ein unerwünschtes nachträgliches axiales Ausdehnen der im gerafften Zustand axial zusammengepreßten Schlauchraupe nicht zuverlässig verhindert. Außerdem muß teures Hüllmaterial verwendet werden.

Aus der EP 0 386 409 A2 ist weiterhin ein Verfahren der eingangs genannten Art und eine entsprechende Vorrichtung bekannt. Danach wird die Schlauchraupe mittels einer sie am Umfang erfassenden Prismenzange vom Raffrohr abgezogen und in eine seitlich versetzte Stellung transportiert, in der sie losgelassen und durch einen Stempel axial gegen das nächstliegende, geschlossene Ende eines schlauchnetzförmigen, gerafften Hüllmaterials gestoßen wird. Dadurch wird das Hüllmaterial über die Schlauchraupe gestülpt und anschließend an deren hinteren Ende radial eingeschnürt, durch zwei mit axialem Zwischenabstand gesetzte Klammern verschlossen und dazwischen durchtrennt.

Dieses bekannte Verfahren bedingt verhältnismäßig umfangreiche und komplizierte maschinelle und steuerungstechnische Maßnahmen zur Führung und Bewegung der Schlauchraupe in mehreren Ebenen und Richtungen. Hinzu tritt der Mangel, daß sich die zuvor auf dem Raffrohr fest geraffte Schlauchraupe während der Transportvorgänge infolge Materialelastizität wieder ausdehnen kann, bevor sie im Hüllmaterial verpackt ist.

Der Erfindung liegt daher die Aufgabe zugrunde, ein Verfahren und eine zu dessen Durchführung geeignete Vorrichtung zur Verfügung zu stellen, die mit geringerem Aufwand ein vollautomatisches Einführen und axiales Einschließen der Schlauchraupen in fester gerafftem Zustand in das Hüllmaterial gewährleisten.

Vorstehende Aufgabe wird erfindungsgemäß dadurch gelöst, daß das axiale Einführen der Schlauchraupe in das am Ende geschlossene Hüllmaterial und dessen Überstülpen erfolgen, während die Schlauchraupe noch auf dem Raffrohr sitzt, wobei die Schlauchraupe mit ihrem vorderen Ende gegen das geschlossene Ende des Hüllmaterials geschoben und dann am Umfang erfaßt und gehalten wird, danach das Raffrohr aus dem hinteren Ende der Schlauchraupe und dem Bereich zwischen ihr und dem Vorrat an Hüllmaterial zurückgezogen wird und anschließend in diesem Bereich das Hüllmaterial radial eingeschnürt, verschlossen und durchtrennt wird.

Für die Ausführung dieses Verfahrens braucht man nur einen axialen Antrieb für die Relativbewegungen zwischen dem Vorrat an gerafftem Hüllmaterial und der Schlauchraupe. Besonders vorteilhaft ist, daß sich an dem fest gerafften Zustand der Schlauchraupe noch nichts geändert hat, bis ihr das am einen Ende bereits geschlossene Hüllmaterial übergestülpt und auch noch am anderen Ende geschlossen worden ist. Man kann sogar die Länge der verpackten Schlauchraupen noch weiter verkürzen, indem in bevorzugter Ausgestaltung der Erfindung die Schlauchraupen vor dem Einführen in das Hüllmaterial durch vorübergehendes Bremsen oder Anhalten ihres vorderen Endes relativ zu ihrem hinteren Ende auf dem Raffrohr axial verdichtet werden. In weiterer bevorzugter Ausführung der Erfindung wird das Hüllmaterial am hinteren Ende der Schlauchraupe verschlossen, während sich diese immer noch im wesentlichen in Flucht mit dem herausgezogenen Raffrohr befindet.

Das Hüllmaterial mit der darin eingepackten Schlauchraupe kann in herkömmlicher Weise an beiden Enden mittels Klammern verschlossen werden. Vorzugsweise wird jedoch ein Hüllmaterial aus thermoplastischem Kunststoff verwendet, welches an den Enden der jeweils eine Schlauchraupe einhüllenden Abschnitte radial eingeschnürt und durch Schweißen verschlossen wird. Trotz der durch die zusammengepreßte Schlauchraupe ausgeübten Kraft läßt sich überraschenderweise dabei sogar ein Netzschlauch als Hüllmaterial verwenden und an den Enden verschweißen.

Eine zur Durchführung dieses neuen Verfahrens geeignete Vorrichtung hat wenigstens ein zwischen mehreren Stellungen bewegbares Raffrohr mit Abzugsbüchse, eine auf ihrer äußeren Umfangsfläche das axial geraffte Hüllmaterial tragende, durchgehend hohle Vorratstrommel, eine Schließ- und Trenneinrichtung für das Hüllmaterial und eine die umhüllte Schlauchraupe während des Verschließens des Hüllmaterials am Umfang abstützende Greifeinrichtung und ist erfindungsgemäß dadurch gekennzeichnet, daß die Vorratstrommel, die Schließ- und Trenneinrichtung und die Greifeinrichtung als Einheit nebeneinander in einer Raffrohrstellung in Flucht mit dem Raffrohr angeordnet sind und diese Einheit und das Raffrohr relativ zueinander derart verfahrbar sind, daß das Raffrohr durch die Vorratstrommel hindurch in die Greifeinrichtung vorschiebbar und wieder aus der Vorratstrommel herausziehbar ist.

Ein Ausführungsbeispiel der Erfindung wird nachstehend anhand der Zeichnung näher erläutert. Es zeigen:

Fig. 1     in vereinfachter Draufsicht von oben eine kombinierte Raff- und Verpakkungsvorrichtung in einer Stellung vor Beginn eines Raff- und Verpackungszyklus;

Fig. 2     die Vorrichtung nach Fig. 1 nach dem Einführen eines Raffrohrs in das zu raffende schlauchförmige Material, während gleichzeitig eine auf einem anderen Raffrohr sitzende, zuvor geraffte Schlauchraupe an eine Vorratstrommel herangefahren worden ist, welche Hüllmaterial zum Verpacken der Schlauchraupe bereithält;

Fig. 3     eine Teilansicht der Vorrichtung nach Fig. 1 und 2 in einer Stellung, in welcher die Schlauchraupe, auf dem Raffrohr sitzend, vollständig durch die Vorratstrommel mit Hüllmaterial hindurchgefahren und dabei eingehüllt worden ist;

Fig. 4     in einer Teilansicht entsprechend Fig. 3 die Vorrichtung in einer Stellung nach dem Zurückziehen des Raffrohrs aus der Schlauchraupe während des Verschließens des Hüllmaterials;

Fig. 5     die in Fig. 3 und 4 gezeigten Teile wieder in der Ausgangsstellung nach Fig. 1, in welcher die zuvor verpackte Schlauchraupe losgelassen und ausgespeist wird.

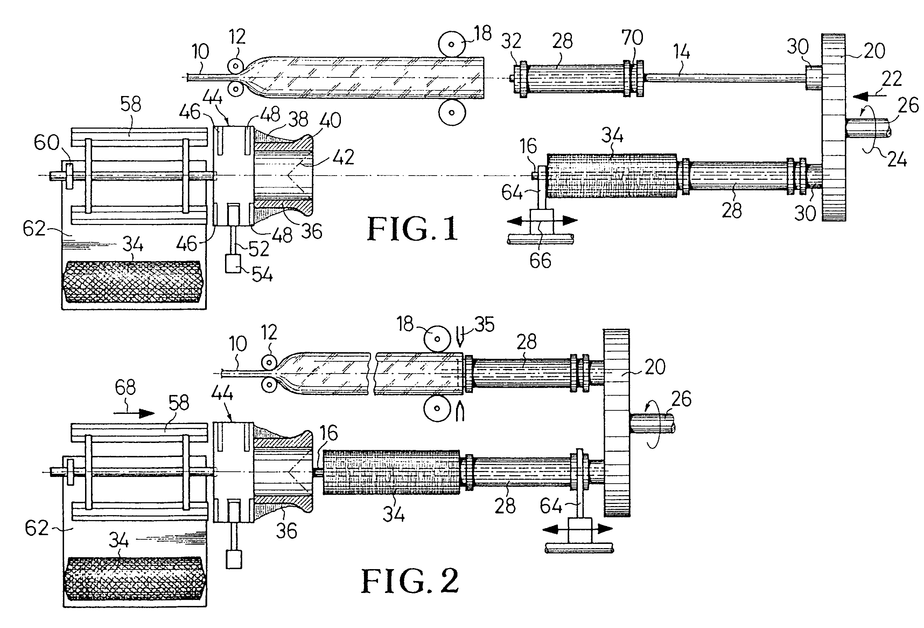

In Fig. 1 und 2 ist eine herkömmliche Raffvorrichtung zum Herstellen von zu Raupen gerafften Schlauchhüllenabschnitten aus einem beliebig langen Schlauchhüllenstrang schematisch dargestellt. Der in flachem Zustand von einer (nicht gezeigten) Haspel kommende Schlauchhüllenstrang 10 passiert zunächst ein Quetschwalzenpaar 12, das die Schlauchhülle abdichtet. Hinter dem Quetschwalzenpaar 12 wird der Schlauchhüllenstrang 10 durch ein mit einer Bohrung versehenes Raffrohr 14 geöffnet, indem durch dieses Rohr Blähluft in den offenen Schlauchhüllenstrang 10 eingeblasen wird. Dieser durchläuft schließlich ein Raffwerkzeug 18, das mit zwei Raffrollen schematisch angedeutet ist, die den Schlauchhüllenstrang bis zum Raffrohrumfang einschnüren und bei ihrer Drehung zugleich vorschieben.

Anstelle der gezeigten zwei Raffrollen kann das Raffwerkzeug 18 auch drei oder noch mehr Raffrollen haben, oder es kann mit andersartigen Rafforganen, wie bspw. einer rotierend angetriebenen Innenschnecke, gearbeitet werden, wie sie beispielsweise aus der DE-PS 21 47 498 bekannt ist. Welche Art Raffwerkzeug verwendet wird, spielt für das hier betrachtete Verfahren keine Rolle, da allen Raffwerkzeugen das Vorschieben des Schlauchhüllenmaterials zum Zwecke des Raffens gemeinsam ist.

Fig. 2 stellt die Situation nach dem Einfahren des Raffrohrs 14 in den aufgeblähten Endabschnitt des Schlauchhüllenstrangs 10 dar. Die Quetschwalzen 12 und das Raffwerkzeug 18 stehen noch still, und der Schlauchhüllenstrang 10 erstreckt sich ein Stück über das Raffwerkzeug 18 hinaus, wo er durch die eingeleitete Blasluft in Offenstellung mit ringsum etwa gleich großem Abstand zum Raffrohr 14 gehalten wird. Das Raffrohr 14 ist mit seinem hinteren Ende fest an einer Revolverscheibe 20 angebracht, die, wie durch Pfeile 22 und 24 angedeutet, axial verschieblich und in bestimmten Winkelschritten drehbar ist. Im Beispielsfall trägt die Revolverscheibe 20 noch ein weiteres Raffrohr 16, welches mit Bezug auf die Drehachse 26 der Revolverscheibe 20 auf demselben Radius wie das Raffrohr 14, aber um 180° versetzt zu diesem angeordnet ist. Statt der beschriebenen Revolvereinrichtung 20 mit zwei Raffrohren 14, 16 könnte auch eine andere Halterung für ein, zwei oder noch mehr Raffrohre vorhanden sein, welche drehbar oder derart verschieblich ist, daß ein Raffrohr aus einer mit dem ankommenden Schlauchhüllenstrang 10 und dem Raffwerkzeug 18 fluchtenden Stellung in eine dazu versetzte Stellung gebracht werden kann. Dies erfolgt bei der Vorrichtung nach Fig. 1 und 2 in einfacher Weise durch Drehung der Revolverscheibe um jeweils 180°, wodurch abwechselnd das Raffrohr 14 und das Raffrohr 16 in eine Raffposition (in Fig. 1 und 2 oben gezeigt) und in eine Verpackungsposition (in Fig. 1 und 2 unten gezeigt) gebracht werden.

Auf jedem Raffrohr 14, 16 sitzt axial verschieblich eine Abzugsbüchse 28, die in ihrer hintersten Stellung durch die Revolverscheibe 20 oder jeweils eine mit dieser verbundene Anschlagbüchse 30 axial abgestützt wird. Im Beispielsfall hat die Abzugsbüchse 28 ein vorderes, verjüngtes Ende 32, welches in den Schlauchhüllenstrang 10 eindringt und dessen Ende zentriert. Das freie Ende des Schlauchhüllenstrangs 10 könnte aber auch stumpf gegen die Stirnfläche der Abzugsbüchse 28 stoßen.

Der Raffvorgang, d.h. die Bildung einer Schlauchraupe aus dem Schlauchhüllenstrang 10 ist in der Zeichnung nicht dargestellt, da bekannt und für die Erfindung nicht wesentlich. Während des Raffvorgangs legt das Raffwerkzeug 18 den Schlauchhüllenstrang 10 in Falten und drückt diese gegen die Abzugsbüchse 28, während die Revolverscheibe 20, ausgehend von der Stellung nach Fig. 2, langsam nach rechts zurückfährt. Es entsteht dabei auf dem Raffrohr 14 eine Schlauchraupe 34 gewünschter Länge, wie sie auf dem anderen Raffrohr 16 gezeigt ist. Die aus dem vielfach gefalteten Schlauchhüllenstrang 10 gebildete Schlauchraupe wird mittels einer Schneideinrichtung 35 zwischen der Abzugsbüchse 28 und dem Raffwerkzeug 18 von dem noch ungerafften Teil des Schlauchhüllenstrang 10 abgetrennt.

Die Erfindung beschäftigt sich mit dem Verpakken der in der beschriebencn Weise zuvor auf einem Raffrohr erzeugten Schlauchraupen 34. Hierzu wird die Revolverscheibe 20 entsprechend dem Pfeil 24 um 180° gedreht, so daß das Raffrohr mit einer zuvor darauf erzeugten Schlauchraupe 34 in eine parallele, zum Schlauchhüllenstrang 10 und Raffwerkzeug 18 seitlich versetzte Stellung gelangt, wie dies in Fig. 1 für das Raffrohr 16 gezeigt ist. In dieser Stellung befindet sich das Raffrohr 16 axial gegenüber einer Vorratstrommel 36, die auf ihrem äußeren Umfang einen Vorrat eines axial gerafften Hüllmaterials 38 trägt. Das zur Revolverscheibe 20 weisende Ende des Hüllmaterials 38 ist über eine radial vergrößerte Ablaufkante 40 der Vorratstrommel 36 gezogen und geschlossen, Wie in Fig. 1 bei 42 gestrichelt angedeutet. Das Hüllmaterial 38 ist vorzugsweise ein Netzschlauch aus thermoplastischem Kunststoff, der sich durch Hitze verschweißen läßt.

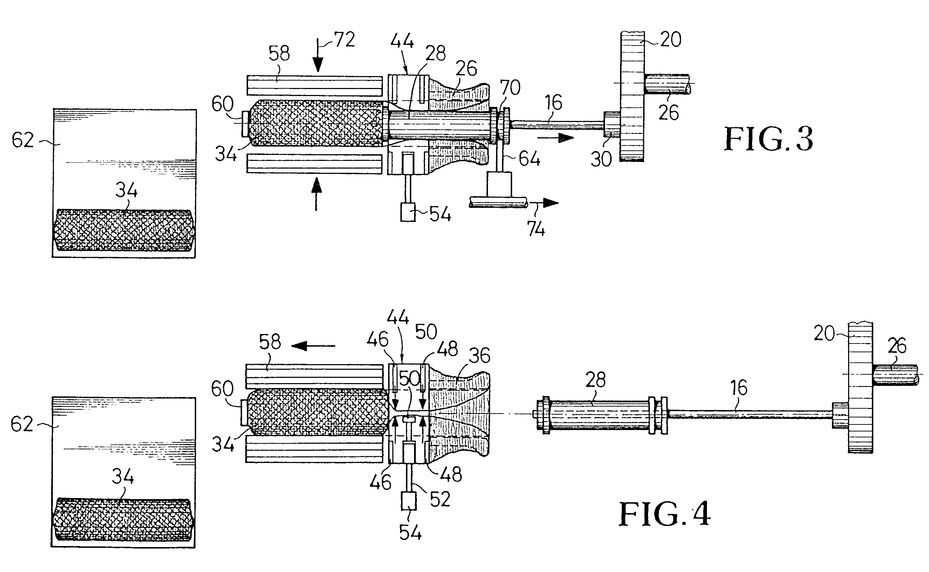

Die Vorratstrommel 36 ist leicht lösbar an einer Endwand des Gehäuses einer Schließ- und Trenneinrichtung 44 befestigt. Diese enthält zwei mit axialem Zwischenabstand angeordnete Paare von Einschnürorganen 46, 48 und dazwischen einen elektrisch beheizbaren Schweißkopf 50 (siehe Fig. 4), der über einen schwenkbar gelagerten Hebelarm 52 mit einem Gewicht 54 verbunden ist.

Die Einschnürorgane 46, 48 sind im wesentlichen konzentrisch zur axial durchgehenden zentralen Bohrung der Vorratstrommel 36 angeordnet und z.B. nach Art von Verdrängerscheren, wie sie beim Einschnüren eines Wurststrangs zum Abteilen der einzelnen Würste Verwendung finden, derart ausgebildet, daß sie ein schlauchförmiges Material, welches sich durch die zentrale Bohrung der Vorratstrommel 36 und durch die Schließ- und Trenneinrichtung 44 erstreckt, radial auf die bei 56 angedeutete Mittellängsachse der Vorratstrommel 36 und des Raffrohrs 16 zusammenschnüren. Der Schweißkopf 50 kann zwischen den Einschnürorganen 46, 48 gegen das fadenförmig zusammengeschnürte Schlauchmaterial geführt werden, um dieses zu verschließen und zu durchtrennen.

Auf der Vorratstrommel 36 gegenüberliegenden Seite ist die Schließ- und Trenneinrichtung 44 mit einem Greifer 58, z.B. in Form einer Prismenzange, verbunden. Der Greifer 58 ist so bemessen, daß er eine durch die zentrale Bohrung der Vorratstrommel 36 und durch die Schließ- und Trenneinrichtung 44 hindurchgeführte Schlauchraupe 34 im wesentlichen auf ihrer gesamten Länge am Umfang erfassen und unter radialer Spannung halten kann. Am axial äußeren Ende des Greifers 58 befindet sich ein axial einstellbarer Anschlag 60, welcher in die Bewegungsbahn einer axial durch die Vorratstrommel 36 bewegten Schlauchraupe 34 ragt, und in der Ausgangsstellung nach Fig. 1 ist unterhalb des Greifers 58 eine seitlich abfallende schräge Ebene oder Rutsche 62 angebracht, über welche fertig verpackte Schlauchraupen 34 ausgespeist werden.

Während des Raffens preßt sich das geraffte Schlauchhüllenmaterial radial verhältnismäßig fest gegen das Raffrohr, so daß eine Schlauchraupe 34 im wesentlichen ihre Form und Länge beibehält, solange sie auf dem Raffrohr sitzt. Bei der dargestellten Vorrichtung ist darüberhinaus eine weitere Verdichtung der Schlauchraupe 34 über den beim Raffen erreichten Zustand hinaus vorgesehen. Hierzu dient ein Anschlag 64, der zwischen der Revolverscheibe 20 und der Vorratstrommel 36 radial in die axiale Bewegungsbahn der Schlauchraupe 34 geschwenkt oder vorgeschoben werden kann, wie in Fig. 1 gezeigt. Er kommt dadurch zur Anlage am vorderen Ende der Schlauchraupe 34, wenn diese zusammen mit der Revolverscheibe 20 und den Raffrohren 14, 16 mit Bezug auf Fig. 1 und 2 nach links verfahren wird, um das eine Raffrohr 14 in den aufgeblähten Schlauchhüllenstrang 10 einzuführen und gleichzeitig die auf dem anderen Raffrohr 16 sitzende Schlauchraupe 34 an die Vorratstrommel 36 mit dem Hüllmaterial 38 heranzuführen. Bei dieser Bewegung, welche von der Stellung nach Fig. 1 in die Stellung nach Fig. 2 führt, wird durch vorübergehende Anlage des Anschlags 64 am vorderen Ende der Schlauchraupe 34 diese zwischen dem Anschlag 64 und der über die Anschlagbüchse 30 an der Revolverscheibe 20 abgestützten Abzugsbüchse 28 axial komprimiert. Dieser Verdichtungsvorgang kann z.B. so ausgeführt werden, daß der Anschlag 64 axial ortsfest gehalten wird, während die Revolverscheibe 20 bis auf einen vorbestimmten Abstand an ihn heranfährt, dann anhält und nach dem radialen Zurückziehen des Anschlags 64 weiter nach links in die Stellung nach Fig. 2 fährt. Praktische Versuche haben jedoch gezeigt, daß der Zwischenhalt der Revolverscheibe 20 zum radialen Zurückziehen des Anschlags 64 nicht unbedingt nötig ist. Letzterer kann auch während der durchgehenden axialen Verschiebung der Revolverscheibe 20 nach links radial zurückgezogen werden, wenn diese sich ihm bis auf einen bestimmten Abstand genähert hat. Der Anschlag 64 könnte auch während der Verdichtung der Schlauchraupe 34 in Richtung des Doppelpfeils 66 axial in die eine oder andere Richtung bewegt werden, wobei es lediglich darauf ankommt, daß sich infolge der Relativgeschwindigkeit zwischen Anschlag 64 und Revolverscheibe 20 beim radialen Zurückziehen des Anschlags 64 dessen Abstand zur Revolverscheibe 20 auf einen vorgegebenen Abstand verkürzt hat, bei dem die Schlauchraupe 34 von ihrer ursprünglichen Länge auf ein bestimmtes Maß verkürzt ist.

Die Revolverscheibe 20 führt diejenigen axialen Bewegungen aus, die für das Raffen einer bestimmten Länge des Schlauchhüllenstrangs 10, z.B. 70 m, zu einer Schlauchraupe 34 erforderlich sind. Diese axialen Bewegungen der Raffrohre 14, 16 reichen normalerweise nicht aus, um in der seitlichen Stellung, welche in Fig. 1 und 2 das Raffrohr 16 einnimmt, die Schlauchraupe 34 durch die Vorratstrommel 36 und die Schließ- und Trenneinrichtung 44 hindurch in den Greifer 58 zu transportieren. Deshalb sollte in der Regel auch die aus der Vorratstrommel 36, der Schließ- und Trenneinrichtung 44 und dem Greifer 58 bestehende Einheit axial verfahrbar sein. Der Antrieb kann z.B. durch einen gesteuerten Elektromotor über eine Gewindespindel oder einen steuerbaren Hydraulikantrieb erfolgen. Die Antriebsglieder sind herkömmlicher Art und in der Zeichnung der Übersichtlichkeit halber weggelassen worden. Mittels dieses Antriebs fährt die aus den Teilen 36, 44 und 58 bestehende Einheit, unabhängig davon, wie weit in der nach links vorgeschobenen Endstellung der Revolverscheibe 20 das freie Ende des Raffrohrs 16 und das vordere Ende der Schlauchraupe 34 bereits in die Vorratstrommel 36 hineinragen, entsprechend dem Pfeil 68 nach rechts, bis das freie Ende des Raffrohrs 16 sich nahe an dem Anschlag 60 befindet. Diese Bewegung kann sehr schnell ausgeführt werden, wobei das freie Ende des Raffrohrs 16 das geschlossene Ende 42 des Hüllmaterials 38 vor sich herschiebt und dadurch ein Abschnitt des insgesamt z.B. 40 m langen Vorrats des Hüllmaterials 38 über die gerundete Kante 40 nach radial einwärts abgezogen und durch die Mitnahme nach links umgestülpt und zumindest über den vorderen Bereich der Schlauchraupe 34 gezogen wird. Wenn die Schlauchraupe 34 vorn auf dem Raffrohr sitzt, kann sie durch einen nicht gezeigten steuerbaren Anschlag am Greifer 58 oder an der Einrichtung 44 axial gehalten werden, während das Raffrohr zurückgezogen wird.

Um wieviel das freie Ende des Raffrohrs 16 nach vorn aus der Schlauchraupe 34 herausragt, hängt davon ab, wie lang die zu verpackenden Schlauchraupen im Einzelfall sind. In der Regel befindet sich das vordere Ende der Schlauchraupe 34 in einem mehr oder minder großen Abstand vom vorderen Ende des Raffrohrs 16. Dies schadet jedoch nicht, da das Hüllmaterial 38 mit nur geringem Widerstand vom Vorrat abgezogen werden kann und somit das geschlossene Ende 42 vom hineinstoßenden Raffrohr 16 nicht durchbohrt wird.

Der axiale und radiale Antrieb des Anschlags 64 sind so gesteuert, daß in der ganz nach links vorgeschobenen Stellung der Revolverscheibe 20 der nach dem Verdichten der Schlauchraupe 34 gemäß Fig. 1 radial zunächst zurückgezogene Anschlag 64 wieder radial einwärts bewegt wird und dabei gemäß Fig. 2 mit einer entsprechenden Nut 70 in der Abzugsbüchse 28 in Eingriff kommt. Der Anschlag 64 hält sodann die Abzugsbüchse 28 axial fest, während bei laufendem Raffvorgang die Revolverscheibe 20 mit den Raffrohren 14 und 16 langsam nach rechts in die Ausgangsstellung zurückfährt. Dabei folgt die aus den Teilen 36, 44, 58 bestehende Einheit mit gleicher Geschwindigkeit, wobei der Abstand zur Revolverscheibe 20, der sich ergeben hatte, als mit dem Anschlag 60 bis nahe an das freie Ende des Raffrohrs 16 herangefahren worden war, beibehalten wird. Die axiale Bewegung der Vorratstrommel 36 hält erst an, wenn sie gemäß Fig. 3 nahe an den Anschlag 64 herangefahren ist. Während dieser Bewegung wird die Schlauchraupe 34 durch die mittels des Anschlags 64 festgelegte Abzugsbüchse 28 festgehalten, so daß sie von dem nach rechts zurückgezogenen Raffdorn 16 abgestreift wird. In der Stellung nach Fig. 3 hat sich das freie Ende des Raffrohrs 16 soweit zurückgezogen, daß es nicht mehr über das vordere Ende der Schlauchraupe 34 übersteht, und der bis dahin der Rückzugsbewegung folgende, mit dem Greifer 58 verbundene Anschlag 60 hat das vordere Ende der nunmehr vollständig vom Hüllmaterial 38 umhüllten Schlauchraupe 34 erreicht. Jetzt schließt der Greifer 58, wie mit Pfeilen 72 in Fig. 3 angezeigt, und spannt die Schlauchraupe über ihre Länge am Umfang radial ein. Fig. 3 läßt weiterhin erkennen, daß die Abzugsbuchse 28 so lang ist, daß sie sich axial durch die Vorratstrommel 36 und die Schließ- und Trenneinrichtung 44 hindurch erstreckt, während sie am hinteren Ende durch den in die Nut 70 eingreifenden Anschlag 64 außerhalb der Vorratstrommel 36 axial festgehalten wird. Der Anschlag 64 hat vorzugsweise die Form einer Zange, deren Hebel auf gegenüberliegenden Seiten in die Nut 70 eingreifen.

Der Anschlag 60 ist nicht unbedingt notwendig, wenn der Greifer 58 die Schlauchraupe 34 radial erfaßt und einspannt, sobald das ursprünglich über das vordere Ende der Schlauchraupe 34 vorragende freie Ende des Raffrohrs 16 bis an das vordere Stirnende der Schlauchraupe 34 zurückgezogen worden ist. Dennoch bietet der Anschlag 60 eine zusätzliche Sicherheit, daß sich die Schlauchraupe 34 nicht mit Bezug auf Fig. 3 nach links ausdehnt, während das Raffrohr 16 herausgezogen wird. Bei Vorhandensein eines Anschlags 60 kann mit der Aktivierung des Greifers 58 auch gewartet werden, bis das Raffrohr 16 weitgehend aus der Schlauchraupe 34 herausgezogen worden ist.

Kurz bevor während der Rückzugsbewegung des Raffrohrs 16 dessen vorderes Ende das vordere Ende der Abzugsbuchse 28 erreicht, wird auch der Anschlag 64 und damit die Abzugsbuchse 28 mit gleicher Geschwindigkeit aus der Vorratstrommel 36 herausgezogen, wie dies in Fig. 3 durch den Pfeil 74 angedeutet ist. Es wird somit die Stellung nach Fig. 4 erreicht.

Nachdem die Abzugsbüchse 28 aus der Schließ- und Trenneinrichtung 44 herausgezogen worden ist, treten die Einschnürorgane 46, 48 in Funktion und schnüren zwischen sich das Hüllmaterial zu einem schmalen Strang auf die Mittellängsachse 56 ein. Sodann läßt ein nicht gezeigter Kraftzylinder, der am Hebelarm 52 angreift und das Gewicht 54 auf einem angehobenen Niveau gehalten hatte, während gleichzeitig der mit dem Hebelarm 52 verbundene Schweißkopf 50 eine radial zurückgezogene Position einnahm, den Hebelarm 52 los, so daß der Schweißkopf 50 gegen das im axialen Bereich zwischen den Einschnürorganen 46, 48 radial eingeschnürte Hüllmaterial verschwenkt wird, wobei der Andruck durch die Größe des Gewichts 54 und die Länge des Hebelarms 52 bestimmt ist. Der Schweißkopf 50 schweißt sich durch das radial zusammengeschnürte Hüllmaterial 38, wobei es zu beiden Seiten des Schweißkopfs 50 zu jeweils einem Verschluß zusammengeschweißt wird. Es ergibt sich somit gemäß Fig. 4 auf der linken Seite des Schweißkopfs 50 ein Verschluß des Hüllmaterials am hinteren Ende der eingehüllten Schlauchraupe 34 und außerdem auf der rechten Seite des Schweißkopfs 50 ein Verschluß des Endes des Hüllmaterialvorrats, so daß bei diesem der Ausgangszustand, wie gemäß Fig. 1 und 2, wieder hergestellt ist. Nachdem sich der Schweißkopf 50 durch den Hüllmaterialstrang hindurchgeschweißt und diesen zwischen den beiden genannten Verschlußstellen durchtrennt hat, wird das Gewicht 54 durch den genannten Kraftzylinder wieder angehoben und der Schweißkopf 50 radial nach außen zurückgeschwenkt.

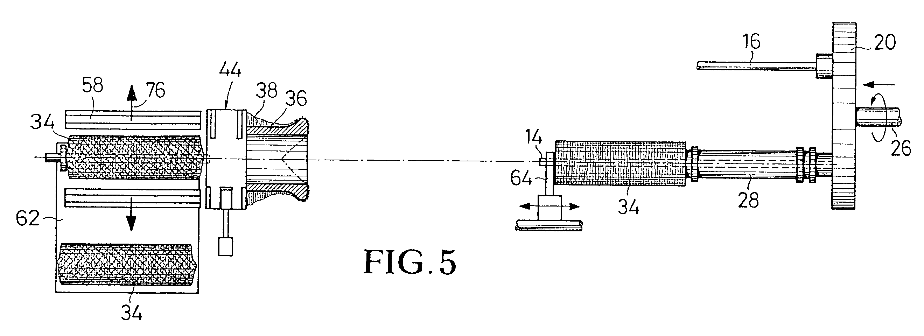

Während noch der vorstehend geschilderte Schweißvorgang stattfindet, kann bereits die aus der Vorratstrommel 36, der Schließ- und Trenneinrichtung 44 und dem Greifer 58 bestehende Einheit nach links in ihre Ausgangsstellung gemäß Fig. 1 und 2 verfahren werden, weil diese Fahrbewegung den Schweißvorgang nicht stört. In der linken Endstellung öffnet nach Beendigung des Schweißvorgangs der Greifer 58 in Pfeilrichtung 76 gemäß Fig. 5 und läßt die fertig verpackte Schlauchraupe 34 auf die Schrägfläche 62 fallen, so daß sie, ohne daß weitere anzutreibende Transportmittel nötig wären, seitlich aus der Maschine ausgespeist wird. Selbstverständlich können aber auch die fertig verpackten Schlauchraupen vom Greifer 58 an einen geeigneten Förderer übergeben und zu einer weiter entfernten Stelle transportiert werden.

Bereits in der Stellung nach Fig. 4 hatte die Revolverscheibe 20 ihre zurückgezogene Ausgangsstellung erreicht. Auf dem Raffrohr 16 sitzt an dessen vorderen Ende die Abzugsbuchse 28, und auf dem in Fig. 4 und 5 nicht gezeigten Raffrohr 14 sitzt eine während des vorstehend beschriebenen Verpackungszyklus erzeugte neue Schlauchraupe 34. Nunmehr wird der Anschlag 64 radial zurückgezogen und axial in die zum Komprimieren der nächsten Schlauchraupe 34 erforderliche Stellung gefahren. Sodann wird die Revolverscheibe 20 um 180° gedreht. Die Abzugsbuchse 28, welche auf dem vorderen Ende des nunmehr in die Raffposition gelangten Raffrohrs 16 sitzt, wird von einem nicht gezeigten Rohrzentrierer erfaßt und axial sowie radial gehalten, während das Raffrohr zur Vorbereitung des nächsten Raffvorgangs nach links durch das Raffwerkzeug 18 vorgeschoben wird, wie oben bereits beschrieben. Vor Beginn des Raffvorgangs gibt der Rohrzentrierer die Abzugsbuchse 28 wieder frei, und der gesamte vorstehend beschriebene Vorgang des Raffens und des parallel dazu stattfindenden Verpackens kann erneut beginnen.

## Patentansprüche

1. Verfahren zum maschinellen Verpacken eines auf einem Raffrohr zu einer Schlauchraupe gerafften Schlauchabschnitts, z. B. Kunstdarm für die Wurstherstellung, in schlauchförmigem Hüllmaterial, welches in gerafftem Zustand mit einem geschlossenen Ende gehalten, beim axialen Einführen der Schlauchraupe übergestülpt und an deren hinteren Ende verschlossen wird, **dadurch gekennzeichnet,** daß das axiale Einführen der Schlauchraupe (34) in das am Ende (bei 42) geschlossene Hüllmaterial (38) und dessen Überstülpen erfolgen, während die Schlauchraupe (34) noch auf dem Raffrohr (16) sitzt, wobei die Schlauchraupe (34) mit ihrem vorderen Ende gegen das geschlossene Ende des Hüllmaterials (38) geschoben und dann am Umfang erfaßt und gehalten wird, danach das Raffrohr (16) aus dem hinteren Ende der Schlauchraupe (34) und dem Bereich zwischen ihr und dem Vorrat an Hüllmaterial (36) zurückgezogen wird und anschließend in diesem Bereich das Hüllmaterial (38) radial eingeschnürt, verschlossen und durchtrennt wird.

2. Verfahren nach Anspruch 1, **dadurch gekenn-**

zeichnet, daß die Schlauchraupe (34) vor dem Einführen in das Hüllmaterial (38) durch vorübergehendes Bremsen oder Anhalten ihres vorderen Endes relativ zu ihrem hinteren Ende auf dem Raffrohr (16) axial verdichtet wird.

3. Verfahren nach Anspruch 1, **dadurch gekennzeichnet,** daß das Hüllmaterial (38) am hinteren Ende der Schlauchraupe (34) verschlossen wird, während sie sich noch im wesentlichen in Flucht mit dem herausgezogenen Raffrohr (16) befindet.

4. Verfahren, insbesondere nach Anspruch 3, **dadurch gekennzeichnet,** daß das Hüllmaterial aus thermoplastischem Kunststoff, vorzugsweise in Form eines Netzschlauchs, besteht, und an den Enden der jeweils eine Schlauchraupe (34) einhüllenden Abschnitte radial eingeschnürt und durch Schweißen verschlossen wird.

5. Verfahren nach Anspruch 4, **dadurch gekennzeichnet,** daß der Netzschlauch (38) beim Verschließen an zwei Stellen mit axialem Zwischenabstand eingeschnürt und dazwischen durch Erwärmung durchtrennt und gleichzeitig zu beiden Seiten der Trennstelle zugeschweißt wird.

6. Verfahren nach Anspruch 1, **dadurch gekennzeichnet,** daß die Schlauchraupe (34) auf dem Raffrohr (16) durch das geraffte Hüllmaterial (38) hindurch und mit ihrem vorderen Ende bis an eine axiale Abstützung (60) geführt wird.

7. Verfahren nach Anspruch 1, **dadurch gekennzeichnet,** daß die Schlauchraupe (34), auf dem Raffrohr (16) sitzend, mit ihrem hinteren Ende durch den Vorrat an gerafftem Hüllmaterial (38) hindurch und noch um einen bestimmten axialen Abstand weiter vorgeschoben wird, bevor das Raffrohr (16) herausgezogen wird.

8. Verfahren nach Anspruch 7, **dadurch gekennzeichnet,** daß die Schlauchraupe (34) beim Herausziehen des Raffrohrs (16) durch eine radial auf ihm geführte axiale Abstützung (28) festgehalten wird.

9. Verfahren nach Anspruch 7, **dadurch gekennzeichnet,** daß die Schlauchraupe (34) beim Herausziehen des Raffrohrs (16) durch eine mit dem bestimmten axialen Abstand hinter dem Vorrat an gerafftem Hüllmaterial (38) axial fest angeordnete Abstützung zurückgehalten wird.

10. Verfahren nach Anspruch 7, **dadurch gekennzeichnet,** daß innerhalb des bestimmten Abstands das Hüllmaterial (38) radial eingeschnürt, an zwei Stellen mit axialem Zwischenabstand verschlossen und dazwischen durchtrennt wird.

11. Verfahren nach Anspruch 10, **dadurch gekennzeichnet,** daß nach dem Verschließen und Durchtrennen des Hüllmaterials (38) die verpackte Schlauchraupe (34) am Umfang losgelassen und durch Schwerkraft über eine schräge Ebene (62) ausgespeist wird.

12. Vorrichtung zur Durchführung des Verfahrens nach einem der Ansprüche 1 bis 11 mit wenigstens einem zwischen mehreren Stellungen bewegbaren Raffrohr (16) mit Abzugsbüchse (28), einer auf ihrer äußeren Umfangsfläche das axial geraffte Hüllmaterial (38) tragenden, durchgehend hohlen Vorratstrommel (36), einer Schließ- und Trenneinrichtung (44) für das Hüllmaterial (38) und einer die umhüllte Schlauchraupe (34) während des Verschließens des Hüllmaterials (38) am Umfang abstützenden Greifeinrichtung (58), **dadurch gekennzeichnet,** daß die Vorratstrommel (36), die Schließ- und Trenneinrichtung (44) und die Greifeinrichtung (58) als Einheit nebeneinander in einer Raffrohrstellung in Flucht mit dem Raffrohr (16) angeordnet sind und diese Einheit (36, 44, 58) und das Raffrohr (16) relativ zueinander derart verfahrbar sind, daß das Raffrohr (16) durch die Vorratstrommel (36) hindurch in die Greifeinrichtung (58) vorschiebbar und wieder aus der Vorratstrommel (36) herausziehbar ist.

13. Vorrichtung nach Anspruch 12, **dadurch gekennzeichnet,** daß neben dem mit der Vorratstrommel (36) des Hüllmaterials (38) fluchtenden Raffrohr (16) ein Anschlag (64) gelagert ist, welcher in die Bewegungsbahn der mit dem Raffrohr (16) zur Vorratstrommel (36) des Hüllmaterials (38) geführten Schlauchraupe (34) bewegbar ist, um die mit dem vorderen Ende gegen den Anschlag (64) stoßende Schlauchraupe (34) axial zu verdichten.

14. Vorrichtung nach Anspruch 13, **dadurch gekennzeichnet,** daß der Anschlag (64) längs des Raffrohrs (16) verfahrbar und mit der das hintere Ende der Schlauchraupe (34) abstützenden, axial verschieblich auf dem Raffrohr (16) sitzenden Abzugsbüchse (28) in Eingriff zu bringen ist.

15. Vorrichtung nach Anspruch 14, **dadurch ge-**

kennzeichnet, daß das Raffrohr (16) axial zwischen einer vorgeschobenen und einer zurückgezogenen Stellung verfahrbar ist und der Anschlag (64) in der vorgeschobenen Stellung des Raffrohrs (16) mit der auf seinem hinteren Bereich sitzenden Abzugsbüchse (28) in Eingriff zu bringen ist.

16. Vorrichtung nach einem der Ansprüche 12 bis 15, dadurch gekennzeichnet, daß auf der der Vorratstrommel (36) des Hüllmaterials (38) gegenüberliegenden Seite der Greifeinrichtung (58) ein Anschlag (60) für das vordere Ende der Schlauchraupe angeordnet ist.

17. Vorrichtung nach einem der Ansprüche 12 bis 16, dadurch gekennzeichnet, daß die Abzugsbüchse (28) axial länger ist als die Vorratstrommel (36) des Hüllmaterials (38) und die Schließ- und Trenneinrichtung (44) zusammen und an ihrem hinteren Ende (bei 70) mit dem Anschlag (64) in Eingriff zu bringen ist.

18. Vorrichtung nach einem der Ansprüche 12 bis 17, dadurch gekennzeichnet, daß sie zwei parallele, mit ihren hinteren Enden an einer Revolverscheibe (20) gelagerte Raffrohre (14, 16) aufweist, und die axialen Bewegungsantriebe der Revolverscheibe (20) und der Vorratstrommel (36) des Hüllmaterials (38) derart gesteuert sind, daß während der Rückzugsbewegung der Revolverscheibe (20) beim Raffen eines Schlauchabschnitts auf dem einen Raffrohr (14) die Vorratstrommel (36) in dieselbe Richtung wie die Revolverscheibe (20) verfahrbar ist und dabei über eine radial auf dem anderen Raffrohr (16) geführte, durch die Abzugsbüchse (28) axial gehaltene Schlauchraupe (34) fährt.

19. Vorrichtung nach einem der Ansprüche 12 bis 18, dadurch gekennzeichnet, daß sich die Greifeinrichtung (58) in einer vom Raffrohr (16) axial entfernten Stellung über einer Schrägfläche (62) befindet, welche sich im wesentlichen parallel zum Raffrohr erstreckt.

20. Vorrichtung nach Anspruch 12, dadurch gekennzeichnet, daß die Schließ- und Trenneinrichtung (44) zwei mit axialem Zwischenabstand angeordnete, das Hüllmaterial (38) auf die Längsachse (56) des Raffrohrs (16) radial einschnürende Verdränger- bzw. Einschnürwerkzeuge (46, 48), ein dazwischen angeordnetes Schneidwerkzeug (50) zum Durchtrennen des Hüllmaterials (38) und Schließorgane (50) zum Verschließen des eingeschnürten Hüllmaterials (38) zu beiden Seiten der Trennstelle aufweist.

21. Vorrichtung nach Anspruch 20, dadurch gekennzeichnet, daß das Schneidwerkzeug und die Schließorgane die Form eines beheizbaren Schweißkopfs (50) haben, welcher durch Wärmeeinwirkung das radial eingeschnürte Hüllmaterial (38) durchtrennt und an der Trennstelle auf beiden Seiten zuschweißt.

22. Vorrichtung nach Anspruch 21, dadurch gekennzeichnet, daß der Schweißkopf (50) beim Schweißvorgang allein durch Schwerkraft belastet ist.

FIG.1

FIG.2

FIG.3

FIG.4

EP 0 508 226 A1

FIG.5

Europäisches
Patentamt

**EUROPÄISCHER RECHERCHENBERICHT**

Nummer der Anmeldung

EP    92 10 5192

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-0 386 409 (KOLLROSS)<br>* das ganze Dokument *<br>--- | 1,12 | A22C13/02 |
| A | EP-A-0 075 933 (KOLLROSS)<br><br><br>* Seite 6, Zeile 1 - Seite 10, Absatz 3 *<br>* Seite 14, Zeile 1 - Seite 16, Absatz 2 *<br>* Seite 20, letzter Absatz - Seite 22, Absatz 1 *<br> | 1,2,7-9,<br>12,13,<br>15,18 | |
| D | & DE-A-3 138 685<br>--- | | |
| A | DE-A-2 511 770 (KOLLROSS)<br>--- | | |
| A | DE-B-1 217 238 (CONFUGA)<br>--- | | |
| A | EP-A-0 131 753 (HOECHST)<br>--- | | |
| A | US-A-3 454 981 (MARTINEK)<br><br>----- | | |

| | RECHERCHIERTE SACHGEBIETE (Int. Cl.5 ) |
|---|---|
| | A22C |

Der vorliegende Recherchenbericht wurde für alle Patentansprüche erstellt

| Recherchenort | Abschlußdatum der Recherche | Prüfer |
|---|---|---|
| DEN HAAG | 17 JULI 1992 | DE LAMEILLIEURE D. |